# EUROPÄISCHE PATENTSCHRIFT

(11) **EP 2 976 237 B1**
(45) Veröffentlichungstag und Bekanntmachung des Hinweises auf die Patenterteilung: **01.08.2018**
(21) Anmeldenummer: 14706302.8
(22) Anmeldetag: 24.02.2014
(51) Int. Cl.: B60R 11/04, H04N 5/225

(54) **KAMERAANORDNUNG FÜR EIN FAHRZEUG UND FAHRZEUG MIT EINER DERARTIGEN KAMERAANORDNUNG**
CAMERA ARRANGEMENT FOR A VEHICLE, AND VEHICLE HAVING A CAMERA ARRANGEMENT OF THIS KIND
SYSTÈME DE CAMÉRA POUR VÉHICULE ET VÉHICULE ÉQUIPÉ D'UN TEL SYSTÈME DE CAMÉRA

(30) Priorität: 22.03.2013 DE 102013205165
(43) Veröffentlichungstag der Anmeldung: 27.01.2016
(73) Patentinhaber: Robert Bosch GmbH, 70442 Stuttgart (DE)
(72) Erfinder: SEGER, Ulrich, 71229 Leonberg-Warmbronn (DE); BAUER, Nikolai, 71696 Moeglingen (DE); HOELLT, Christian, 61137 Schoeneck (DE)
(86) Internationale Anmeldenummer: PCT/EP2014/053503
(87) Internationale Veröffentlichungsnummer: WO 2014/146865

(56) Entgegenhaltungen:
- EP-A2- 2 189 340
- WO-A1-2004/020250
- WO-A1-2010/121982
- DE-A1-102006 059 555
- DE-A1-102009 019 216

## Beschreibung

### Stand der Technik

Die Erfindung betrifft eine Kameraanordnung für ein Fahrzeug, die insbesondere in einem Innenraum eines Fahrzeugs einsetzbar ist, sowie ein derartiges Fahrzeug.

Derartige Kameraanordnungen dienen insbesondere zur Erfassung einer Fahrzeug-Umgebung, z. B. für Fahrerassistenzsysteme. Die Kameraanordnung weist dabei eine Kamera auf, die z. B. über eine Kamerahalterung an einer Innenseite der Fahrzeugscheibe, insbesondere einer Frontscheibe des Fahrzeugs angeklebt, oder auch z. B. an einem Rückspiegel oder am Dachhimmel des Fahrzeugs befestigt ist. Weiterhin ist es bekannt, mit der Kamera auch zusätzliche Sekundärfunktionen auszuführen, z. B. die Detektion von Objekten auf der Fahrzeugscheibe, insbesondere die Erfassung von Regentropfen.

Zur Erfassung z.B. der Fahrzeug-Umgebung, insbesondere auch von anderen Verkehrsteilnehmern und Straßenschildern, kann Licht im sichtbaren Spektralbereich verwendet werden, wobei bei einem Einsatz in Nachtsichtsystemen auch Licht im Infrarot-Bereich, d.h. IR-Strahlung, verwendet werden kann.

Die WO 2010/76065 A1 zeigt ein Kamerasystem, das als Primärbild eine Fahrzeug-Umgebung abbildet und als Sekundärbild einen Bereich einer Außenfläche der Fahrzeugscheibe erfasst. Zur Erfassung des Sekundärbildes sind in einem unteren Teil des Erfassungsbereichs ein erster Spiegel und oberhalb des Objektivs ein weiterer Spiegel vorgesehen. Ein im Wesentlichen oberhalb des Objektivs auf der Scheibenaußenseite haftender Belag wird somit durch Umlenken mittels zweier Spiegel von dem Objektiv erfasst. Bei einem derartigen System ist entsprechend ein hinreichender Bauraum bzw. Platz zur Anordnung der Umlenkspiegel erforderlich.

Ausbildungen einer Kamerazusatzoptik mit z. B. Spiegeln wie in der WO 2010/ 76065 A1 sind jedoch relativ aufwendig und erfordern zusätzliche optische Mittel sowie eine geeignete Positionierung und Ausrichtung der Kamera relativ zu der Fahrzeugscheibe.

Die WO 2012/098192 A1 beschreibt die Anbringung eines Prismas an einer Innenseite der Fahrzeugscheibe, wobei das Prisma einen optischen Koppelkörper bildet. Hierbei ist der prismatische Koppelkörper derartig ausgebildet, dass eine wellenlängenselektive Strahlverbreiterung durch die Dispersion des Prismas auf dem Imagermodul nicht in Erscheinung tritt, da die Strahlverbreiterung unterhalb der Auflösung des Bildsensors liegt. Das Licht verläuft somit von der Fahrzeug-Umgebung durch die Fahrzeugscheibe, durch den an der Innenseite der Fahrzeugscheibe liegenden optischen Koppelkörper zu der Kameraoptik und auf den Bildsensor.

Bei einer derartigen Anbringung des Koppelkörpers ist jedoch die relative Position zwischen Koppelkörper und Kamera im Allgemeinen nicht klar festgelegt, so dass die Gefahr einer Fehleinstellung besteht.

Die WO 03/074333 A1 und WO 03/074964 A2 beschreiben dichte Befestigungen einer Kamera an der Windschutzscheibe durch zusätzlich Haltemittel oder Fixiermittel, z. B. an die Innenseite geklebte tubusförmige Objekte, die somit Streulicht abhalten und eine Verschmutzung oder eine Betauung der Windschutzscheibe im relevanten Bereich verhindern.

Allgemein sind der apparative Aufwand derartiger Abbildungssysteme und ihre optische Justierung somit relativ hoch. Bei der Erfassung eines Fahrzeug-Umfeldes z.B. für eine Regensensorik ist meist ein unterhalb des Erfassungsbereichs angeordneter Spiegel vorgesehen, der den Strahlengang in Richtung Himmel umlenkt. Dadurch werden tagsüber, insbesondere bei viel Helligkeit, z.B. durch Sonneneinstrahlung, die optischen Abbildungsseigenschaften und die Regensensorik negativ beeinflusst. Weiterhin ist der optische Abbildungsweg derartiger Systeme relativ kurz, so dass optische Eigenschaften zum Teil beeinträchtigt sein können.

Derartige Kamerasysteme benötigen weiterhin einen freien Durchblick durch die Fahrzeugscheibe, z.B. im Bereich des Dachhimmels. Bei Anbringung einer derartigen Kameraanordnung in einem oberen Bereich der Fahrzeugscheibe, insbesondere der Frontscheibe, ist entsprechend auch ein ggf. vorgesehener Schwarzdruck oder eine andere Abblendung auszusparen. Der hierfür benötigte Freiraum ist insbesondere aufgrund der Schrägstellung der Fahrzeugscheibe zum Teil erheblich. Bei Anbringung zusätzlicher Funktionen in diesem Bereich kann somit auch ein Platzmangel auftreten.

Eine weitere Kameraanordnung ist in DE 10 2006 059 555 A1 gezeigt, wobei ein optischer Koppelkörper aus einem Prisma und einer transparenten Kavität vorgesehen ist, der das durch eine Scheibe eintreffende Licht auf einen Bildsensor der Kamera lenkt. Mit der transparenten Kavität kann der optische Koppelkörper an eine Innenfläche der Scheibe angefügt werden. Der optische Koppelkörper ist über eine Dichtung und eine als Gehäuse ausgeführte Fixiereinrichtung mit der Kamera verbunden, so dass eine relative Positionierung zwischen beiden erreicht wird.

Die WO 2010/121982 A1 beschreibt eine Kameraanordnung, die einen biplanaren Koppelkörper aufweist, der über eine Koppelfläche mit der Scheibe verbunden ist. Weiterhin ist eine als Fixiereinrichtung ausgeführte Positionierungs- und Montagevorrichtung vorgesehen, um eine relative Positionierung zwischen der Kamera und dem optischem Koppelkörper zu erreichen.

Die DE 10 2009 019216 A1 zeigt eine Kameraanordnung mit einer Fixiereinrichtung zur Befestigung einer Kamera hinter eine Scheibe. In einem Raumbereich außerhalb des Sichtbereiches ist ein als Trockenmittel ausgeführtes hydrophiles und/oder kondensationsförderndes Material angeordnet, das die in den Raumbereich eindringende Feuchtigkeit aufnehmen kann.

Die WO 2004/020250 A1 zeigt eine Kameraanordnung mit einer Fixiereinrichtung, bei der ein als Sensorvorraum ausgebildeter Zwischenraum ausgebildet ist, der durch eine um die Kamera umlaufende Dichtung abgedichtet wird.

In EP 2 189 340 A2 ist weiterhin eine Kameraanordnung beschrieben, die einen als optisches Koppelelement ausgebildeten Lichtleiter aufweist, der ein optisches Signal von einer Scheibe des Fahrzeuges zu einem Sensor leitet. Die Fahrzeugumgebung wird von einem separaten Abbildungssystem mit einem weiteren optischen Koppelkörper auf einen Bildsensor abgebildet.

### Offenbarung der Erfindung

Erfindungsgemäß ist eine Fixiereinrichtung vorgesehen, die eine relative Positionierung einer Kamera gegenüber einem an einer Innenseite einer Fahrzeugscheibe angebrachten optischen Koppelkörper sicherstellt.

Hierdurch wird bereits der Vorteil erreicht, dass eine gute optische Abbildung und eine möglichst genaue relative Positionierung zueinander gewährleistet werden.

Der optische Koppelkörper liegt vorzugsweise in einem Bereich zwischen einer Kameraoptik der Kamera und einem Fahrzeug-Umfeld; Licht z. B. im sichtbaren Bereich oder IR-Bereich des Fahrzeug-Umfeldes wird somit durch die Fahrzeugscheibe, den optischen Koppelkörper sowie die Kameraoptik auf den Bildsensor abgebildet. Der optische Koppelkörper ist dabei insbesondere einteilig ausgeführt, d.h. als ein einziges Bauteil vorgesehen und an der Fahrzeugscheibe positionierbar.

Gemäß einer Ausbildung kann der Koppelkörper aus einem homogenen Material, ausgebildet sein; hierdurch wird der Vorteil einer kostengünstigen Ausbildung, z. B. als ein Formteil, z. B. aus einem weichen, optisch transparenten Material wie einem Silikonmaterial, erreicht.

Gemäß einer weiteren Ausführungsform ist eine mehrschichtige Ausbildung möglich, z. B. mit einer zur Anlage an der Innenseite der Fahrzeugscheibe vorgesehenen äußeren Schicht aus z. B. einem weicheren Material, d.h. mit einer geringeren Shore-Härte, insbesondere einem transparenten Silikonmaterial, und einer sich daran anschließenden härteren bzw. formsteiferen inneren Schicht, z. B. einer Glasplatte aus einem Mineralglas oder Kunststoff-Glas.

Durch diese mehrteilige Ausbildung ergeben sich weitere Vorteile:
durch die härtere innere Schicht wird eine hohe Formsteifigkeit ermöglicht, und die Anpresskraft der äußeren, weichen Schicht vergleichmäßigt, so dass auch z. B. ein Einschluss von Luftbereichen zwischen der äußeren, weichen Schicht und der Fahrzeugscheibe weitestgehend verhindert werden kann.

Erfindungsgemäß weist der optische Koppelkörper einen ersten Koppelkörper-Bereich auf, der im Wesentlichen biplanar ausgebildet ist, d.h. der erste Koppelkörper-Bereich weist eine als erste Eintrittsfläche für das Licht dienende Anlagefläche zur Anlage an der Innenseite der Fahrzeugscheibe und eine erste Austrittsfläche auf. Diese beiden Flächen sind im Wesentlichen parallel zueinander; ggf. kann eine leichte Nicht-Parallelität mit prismatischer Ausbildung vorliegen, wenn die hierdurch bewirkte wellenlängendispersive Auffächerung des Lichtes z. B. unterhalb der Auflösung des Bildsensors liegt. Der erste Koppelkörper-Bereich kann somit durch ein einteiliges homogenes Material, oder auch z. B. durch die oben genannte äußere und innere Schicht ausgebildet sein.

Ein Vorteil des optischen Koppelkörpers liegt darin, dass hierdurch eine optische Weglänge von der Kameraoptik zu der Fahrzeugscheibe verringert werden kann. Der optische Koppelkörper kann dabei eine optische Dichte bzw. einen Brechungsindex im Bereich der Fahrzeugscheibe aufweisen. Somit verläuft der zur Fahrzeugscheibe schräge Verlauf des Strahlengangs von der Kameraoptik entlang der optischen Achse über einen kürzeren Bereich; die Folge hiervon ist, dass der durch die Fahrzeugscheibe aufgenommene Erfassungsbereich mit einer kürzeren lateralen Erstreckung ausgebildet werden kann. Der Erfassungsbereich zum Erfassen des Fahrzeugumfeldes benötigt somit einen kleineren Durchtrittsbereich durch die Fahrzeugscheibe. Somit kann sich z. B. ein Schwarzdruck oder eine beliebige andere Abblendung der Fahrzeugscheibe über einen größeren Bereich erstrecken, somit kann eine als optischer Freiraum zum Erfassen des Fahrzeug-Umfeldes vorgesehene Aussparung in diesem abgeblendeten Bereich mit kürzerer lateraler Erstreckung auf der Fahrzeugscheibe ausgebildet werden, so dass die Aussparung optisch nicht so in Erscheinung tritt.

Weiterhin weist der optische Koppelkörper für eine zusätzliche Funktionalität erfindungsgemäß einen zweiten Koppelkörper-Bereich auf, der eine zweite Eintrittsfläche und eine zweite Austrittsfläche für das Licht, d.h. z. B. Licht im optischen Bereich oder auch IR-Strahlung, aufweist. Die zweite Eintrittsfläche und die zweite Austrittsfläche bilden somit nicht lediglich Verlängerungen der ersten Eintrittsfläche und der ersten Austrittsfläche des ersten Koppelkörper-Bereiches; die zweite Eintrittsfläche ist insbesondere nicht-parallel zur ersten Eintrittsfläche. Die zweite Eintrittsfläche und zweite Austrittsfläche können z. B. zusammen ein Prisma bilden bzw. unter einer leichten Neigung zueinander verlaufen, z. B. von der Fahrzeugscheibe weg sich verjüngend. Somit kann z. B. die zweite Austrittsfläche unter einem größeren Winkel gegenüber der ersten Austrittsfläche stehen, z. B. etwa 90°, oder z. B. in einem Bereich zwischen 30° und 120 °.

### Hierdurch werden weitere Vorteile erreicht:

Durch einen einzigen optischen Koppelkörper kann eine hohe Funktionalität gewährleistet werden; es kann ein erstes Abbildungssystem aus Kameraoptik und erstem Koppelkörper-Bereich zur Erfassung einer Fahrzeugumgebung, z. B. eines Straßenbereichs vor dem Fahrzeug, gebildet werden, z. B. mit hoher Gegenstandsweite, z. B. auch einer Gegenstandsweite von unendlich. Weiterhin wird durch die Kameraoptik und den zweiten Koppelkörper-Bereich ein zweites Abbildungssystem ausgebildet, das z. B. für eine Regensensorik, d. h. eine Funktionalität mit kürzerer Gegenstandsweite, dient. Hierbei kann z. B. eine Außenseite der Fahrzeugscheibe abgebildet werden, oder ein Objekt auf der Außenseite der Fahrzeugscheibe, d. h. mit einer Gegenstandsweite kurz vor der Außenseite der Fahrzeugscheibe.

Weitere Vorteile der Abbildungseigenschaften ergeben sich bei einer lateralen Konturierung der zweiten Eintrittsfläche und/oder zweiten Austrittsfläche.

Weiterhin sind unterschiedliche Ausbildungen der Fixiereinrichtung möglich, sowohl bei einem Koppelkörper mit lediglich einem ersten Koppelkörper-Bereich und im wesentlichen biplanarer Ausbildung wie auch bei einer Ausbildung des Koppelkörpers mit einem erstem und einem zweitem Koppelkörper-Bereich. Hierbei kann die Fixiereinrichtung dazu dienen, den optischen Koppelkörper zu fixieren, wobei der optische Koppelkörper insbesondere von der Fixiereinrichtung formschlüssig aufgenommen wird.

Hierdurch ergibt sich der Vorteil, dass der optische Koppelkörper ohne Klebung an der Innenseite der Fahrzeugscheibe angebracht werden kann, indem die Fixiereinrichtung mit formschlüssig aufgenommenem Koppelkörper an der Innenseite der Fahrzeugscheibe fixiert wird, so dass der Koppelkörper zwischen der Innenseite und der Fixiereinrichtung fest bzw. formschlüssig vorgesehen oder verklemmt ist, und z. B. nicht nach innen abfallen kann. Hierzu kann die Fixiereinrichtung den Koppelkörper z. B. an seinen lateralen Enden umfassen. Das hat den Vorteil, dass keine Kleberückstände die optischen Eigenschaften des Koppelkörpers beeinflussen können.

Ein weiterer Vorteil ergibt sich, wenn die Fixiereinrichtung gemäß einer Ausführungsform auch dazu dient, die gesamte Kamera, z.B. an deren Kameragehäuse, aufzunehmen. Somit kann die Kamera von der als Kamerahalterung dienenden Fixiereinrichtung aufgenommen und im Fahrzeug befestigt werden, z. B. durch eine Klebung der Fixiereinrichtung an der Fahrzeugscheibe. Somit entfallen zusätzliche Mittel wie Kamerahalterung etc.

Ein weiterer Vorteil ergibt sich, wenn die Aufnahme der Kamera in der Fixiereinrichtung durch z. B. Einschieben der Kameraoptik bzw. des Objektivs in eine entsprechende Halterung der Fixiereinrichtung erfolgt. Somit kann z. B. die Kameraoptik in der Ausnehmung der Fixiereinrichtung abgedichtet werden, z. B. durch eine Ringdichtung in der Halterung. Somit wird eine genaue relative Positionierung der Kameraoptik und des Bildsensors, d. h. insbesondere eines Imagermoduls aus Trägereinrichtung, Kameraoptik und Bildsensor, gegenüber der Fahrzeugscheibe und dem Koppelkörper gewährleistet. Weiterhin wird eine hohe Dichtigkeit erreicht.

Statt einer derartigen Ringdichtung an der Halterung kann die Kameraoptik auch in axialer Richtung gegen ein als Dichtung wirkendes, an der Halterung angeordnetes weiches Koppelelement gedrückt werden, d. h. es erfolgt eine Abdichtung durch Anpressen der Kameraoptik entlang der optischen Achse gegen das weiche Koppelelement.

Durch diese Dichtungen, d.h. Ringdichtung oder axiale Dichtung, wird der Vorteil erreicht, dass die Fixiereinrichtung eine Abdichtwirkung für den Zwischenraum zwischen der Kameraoptik, der Fixiereinrichtung und dem Koppelkörper ermöglicht und eine Verschmutzung oder Beeinträchtigung des Zwischenraums zwischen dem Koppelkörper und der Kameraoptik vermieden werden kann. Dadurch können auch Verschmutzungen z. B. einer Außenseite der Linse der Kameraoptik weitgehend verhindert werden. Im Zwischenraum kann weiterhin z. B. ein Schutzgas eingelassen sein. Weiterhin kann der Zwischenraum auch mit einem Fahrzeug-Innenraum z. B. auch über eine durchlässige Membran o. ä. verbunden sein, um einen Druckausgleich bei Temperaturschwankungen zu ermöglichen. Im Zwischenraum kann z. B. auch ein Trockenmittel vorgesehen sein, um den Zwischenraum zu trocknen bzw. einen Feuchtigkeitsgrad konstant zu halten.

Vorteilhafterweise kann die Fixiereinrichtung zunächst den Koppelkörper aufnehmen, die Fixiereinrichtung nachfolgend an die Innenseite der Fahrzeugscheibe geklebt werden, und dann die Kamera in die Fixiereinrichtung eingehängt oder eingeschoben werden, so dass gleichzeitig eine abdichtende Wirkung erreicht wird.

Hierdurch wird der Vorteil erreicht, dass eine einfache, schnelle und sichere Anbringung der gesamten Kameraanordnung ermöglicht wird. Weiterhin ist eine genaue Positionierung der Kamera, insbesondere auch des gesamten Systems aus Kameraoptik und Bildsensor, gegenüber der Scheibe und gegenüber dem optischen Koppelkörper, gewährleistet. Weiterhin wird dadurch auch eine flexibler Aufbau ermöglicht, da mit der Fixiereinrichtung unterschiedliche Kameras einfach und sicher relativ zum Koppelkörper positioniert werden können. Es können somit unterschiedliche Kameras an unterschiedlichen Fahrzeug-Typen mit verschiedenem Verlauf der Frontscheibe oder eines abgeblendeten Bereichs (Schwarzdrucks) angebracht werden.

Kurze Beschreibung der Zeichnungen
- Fig. 1: zeigt eine Kameraanordnung gemäß einer Ausführungsform an einer Fahrzeugscheibe;
- Fig. 2: eine entsprechende Darstellung mit einer Fixiereinrichtung gemäß einer Ausführungsform;
- Fig. 3: eine Darstellung des optischen Strahlenverlaufs gemäß der Ausführungsform der Figuren 1 und 2;
- Fig. 4: einen optischen Koppelkörper gemäß einer weiteren Ausführungsform mit mehrschichtigem Aufbau;
- Fig. 5: eine Kameraanordnung gemäß einer weiteren Ausführungsform mit biplanarem optischen Koppelkörper;
- Fig. 6: eine der Fig. 5 entsprechende Ausführungsform mit zusätzlichem Trockenmittel, und
- Fig. 7: eine weitere Ausführungsform mit alternativer Anbindung der Kameraoptik.

### Ausführungsformen der Erfindung

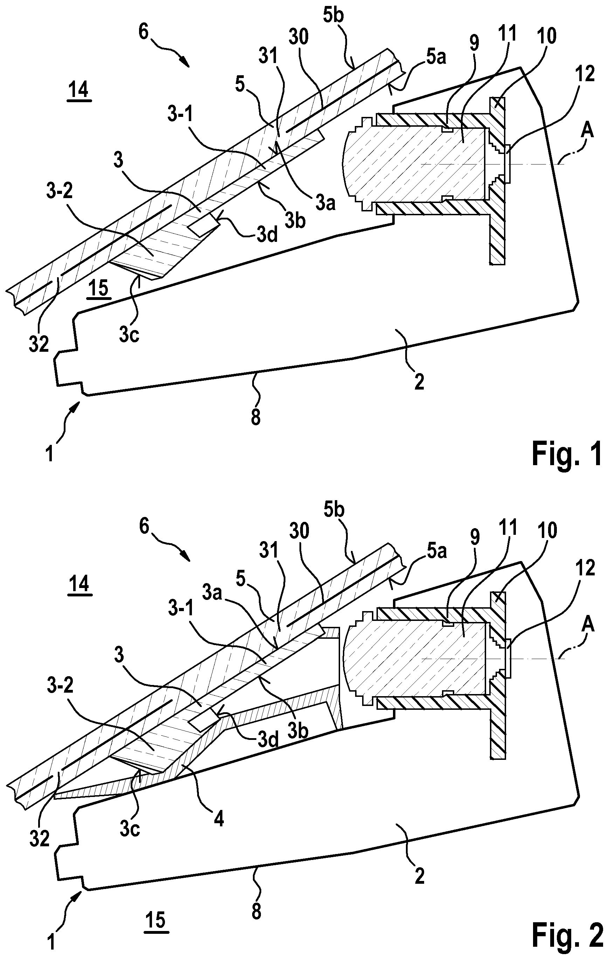

Eine in Fig. 1 und 2 gezeigte Kameraanordnung 1 weist eine Kamera 2, einen optischen Koppelkörper 3 und eine zwischen der Kamera 2 und dem optischen Koppelkörper 3 vorgesehene Fixiereinrichtung 4 auf, die insbesondere aus Fig. 2 ersichtlich ist. Der optische Koppelkörper 3 ist an einer Innenseite 5a der Fahrzeugscheibe 5 angebracht; der optische Koppelkörper 3 liegt somit mit einer Anlagefläche 3a flächig an der Innenseite 5a der Fahrzeugscheibe 5 eines Fahrzeugs 6 an.

Die Kamera 2 weist ein Kameragehäuse 8 und ein Imagermodul 9, sowie weitere, hier nicht gezeigte Komponenten wie z. B. eine Schaltungsträgerplatte, einen Datenanschluss zur Datenverbindung im Fahrzeug 6 und ggf. weitere elektrische Komponenten auf. Das Imagermodul 9 weist im Wesentlichen eine Trägereinrichtung 10, eine Kameraoptik 11, d. h. zum Beispiel ein Objektiv, das insbesondere auch mehrere einzelne Linsen aufweisen kann, und einen an der Trägereinrichtung 10 angebrachten Bildsensor 12 auf. Bei der gezeigten Ausbildung ist die Trägereinrichtung 10 einteilig; sie nimmt somit zum einen den Bildsensor 12 auf und dient weiterhin als Kameraaufnahme für die Kameraoptik 11; grundsätzlich sind jedoch auch mehrteilige Ausbildungen möglich, bei denen z. B. der Bildsensor 12 an einem ersten Teil der Trägereinrichtung 10 angebracht ist, die wiederum eine separate Kameraaufnahme aufweist.

Der Bildsensor 12 und die Kameraoptik 11 definieren eine optische Achse A, die durch den optischen Koppelkörper 3 und die Fahrzeugscheibe 5 auf ein Fahrzeug-Umfeld 14 gerichtet ist. Die in einem Fahrzeug-Innenraum 15 angeordnete Kameraanordnung 1 erfasst somit insbesondere ein Fahrzeug-Umfeld 14 außerhalb des Fahrzeugs 6.

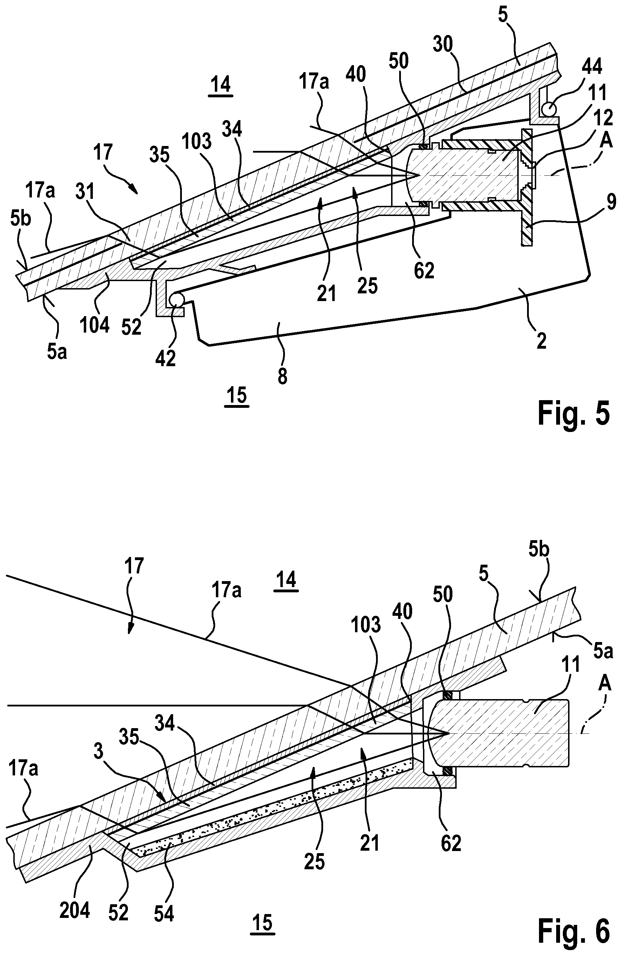

Die Fixiereinrichtung 4 gemäß Figur 2 dient der relativen Positionierung der Kamera 2 gegenüber dem optischen Koppelkörper 3; weiterhin kann die Fixiereinrichtung 4 auch zur relativen Positionierung der Kamera 2 gegenüber der Fahrzeugscheibe 5 dienen. Die Fixiereinrichtung 4 kann bereits als Kamerahalterung zur Befestigung der Kamera 2 und des optischen Koppelkörpers 3 im Fahrzeug 6, z. B. an der Fahrzeugscheibe 5, dienen; weiterhin kann eine zusätzliche, hier nicht gezeigte Kamerahalterung zur mechanischen Positionierung und Befestigung insbesondere der Kamera 2 vorgesehen sein. Bei der Ausführungsform der Fig. 2 stützt sich die Fixiereinrichtung 4 z. B. am Kameragehäuse 8 ab, bei der weiteren beschriebenen Ausführungsform der Fig. 6 kann eine relative Positionierung zwischen der Kameraoptik 11 und der Fahrzeugscheibe 5 und/oder dem optischen Koppelkörper 3 erfolgen. Die Fixiereinrichtung 4 kann insbesondere als Kunststoffteil, z. B. als Kunststoff-Spritzgussteil, ausgebildet sein.

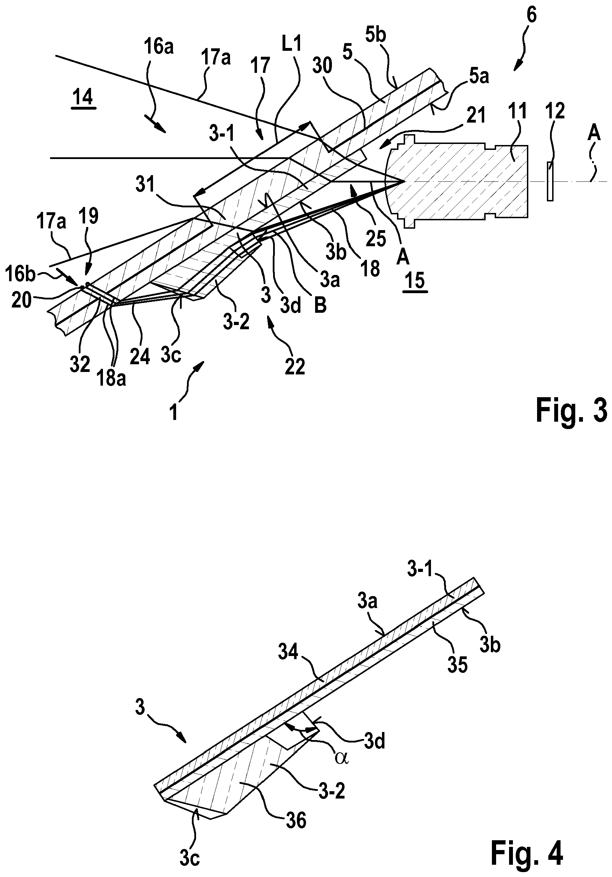

Die Ausführungsformen der Fig. 1 bis 4 zeigen einen optischen Koppelkörper 3, der einen ersten Koppelkörper-Bereich 3-1, durch den die optische Achse A verläuft, sowie einen unterhalb des ersten Koppelkörper-Bereichs 3-1 gelegenen und sich an den ersten Koppelkörper-Bereich 3-1 anschließenden zweiten Koppelkörper-Bereich 3-2 aufweist. Gemäß der Ausführungsform der Fig. 1 bis 3 ist der gesamte optische Koppelkörper 3 homogen durchgängig aus einem für den relevanten Wellenlängenbereich, z. B. sichtbares Licht oder IR-Strahlung, transparentem Material, z.B. als Formteil, gebildet; Fig. 4 zeigt einen mehrschichtigen Aufbau.

Der erste Koppelkörper-Bereich 3-1 ist vorteilhafterweise im Wesentlichen biplanar ausgebildet, d. h. seine an der Innenseite 5a der Fahrzeugscheibe 5 anliegende Anlagefläche 3a verläuft im Wesentlichen parallel zu seiner zum Fahrzeug-Innenraum 15 gelegenen, zur Kameraoptik 11 weisenden ersten Austrittsfläche 3b. Die Anlagefläche 3a passt sich im Wesentlichen der Form der Innenseite 5a der Fahrzeugscheibe 5 an, d.h. ist im Wesentlichen planar; einen entsprechenden Flächenverlauf nimmt somit die erste Austrittsfläche 3b an.

Die Kamera 2 erfasst somit von dem Fahrzeug-Umfeld 14 kommendes Licht (Strahlung) 16a, z. B. im optischen Bereich oder auch im IR-Bereich, durch die Fahrzeugscheibe 5, den ersten Koppelkörper-Bereich 3-1 des optischen Koppelkörpers 3 und einen Streckenbereich 25 im Fahrzeug-Innenraum 15. Somit dient die Anlagefläche 3a des ersten Koppelkörper-Bereichs 3-1 als erste Einrittsfläche (Licht-Eintrittsfläche) in dem optischen Strahlengang zur Erfassung des Fahrzeug-Umfeldes 14. Der erste Koppelkörper-Bereich 3-1 bildet also mit der Kameraoptik 11 ein erstes Abbildungssystem 21, das einen ersten Erfassungbereich 17 abbildet, der durch Randstrahlen 17a begrenzt ist.

Der zweite Koppelkörper-Bereich 3-2 weist eine zweite Eintrittsfläche 3c und eine zweite Austrittsfläche 3d auf, wobei die zweite Eintrittsfläche 3c nicht-parallel zur Innenseite 5a und somit zu der als ersten Eintrittsfläche dienenden Anlagefläche 3a des ersten Koppelkörper-Bereichs 3-1 verläuft; weiterhin verläuft die zweite Austrittsfläche 3d nicht-parallel zur ersten Austrittsfläche 3b und somit auch nicht-parallel zur Innenseite 5a der Fahrzeugscheibe 5. Ein aus Fig. 4 ersichtlicher Winkel α zwischen der ersten Austrittsfläche 3b und der zweiten Austrittsfläche 3d liegt vorteilhafterweise bei etwa 90°; der Winkel α kann z. B. im Bereich zwischen 30° und 120° liegen.

Der zweite Koppelkörper-Bereich 3-2 bildet mit der Kameraoptik 11 somit ein weiteres, zweites Abbildungssystem 22, das hier zur Abbildung eines z. B. in Fig. 3 dargestellten Scheibenumfeldes 19 , das insbesondere durch eine Außenseite 5b der Fahrzeugscheibe 5 definiert sein kann oder auch etwas außerhalb der Außenseite 5b der Fahrzeugscheibe 5 liegen kann, dient. Das Scheibenumfeld 19 kann insbesondere durch auf der Außenseite 5b haftende Objekte 20, insbesondere Wassertropfen oder Regentropfen, ggf. auch Frost oder Verschmutzungen, definiert sein. Somit kann das aus der Kameraoptik 11 und dem zweiten Koppelkörper-Bereich 3-2 gebildete zweite Abbildungssystem 22 zur Detektion einer Scheibenverschmutzung, insbesondere auch als Regensensorik, dienen, um Objekte 20 wie z.B. Regentropfen und Verschmutzungen auf dem Bildsensor 12 abzubilden.

Somit erfolgt die Abbildung von einem durch Licht 16b bestrahltem Objekt 20 auf der Außenseite 5b der Fahrzeugscheibe 5 zunächst durch die Fahrzeugscheibe 5, dann in einem Strahlenpfad 24 zu der zweiten Eintrittsfläche 3c, von dort in den zweiten Koppelkörper-Bereich 3-2, in dem es gebrochen wird und zu der zweiten Austrittsfläche 3d, und von dort zur Kameraoptik 11 gelangt. Somit wird ein zur Abbildung des Fahrzeug-Umfeldes 14 dienender, erster Erfassungsbereich 17, und ein sich nach unten - weg von der optischen Achse A - anschließender zweiter Erfassungsbereich 18, der durch Randstrahlen 18a begrenzt ist, ausgebildet, wobei die Erfassungsbereiche 17 und 18 sich als Raumwinkelbereich vorteilhafterweise aneinander anschließen. Dem zweiten Erfassungsbereich 18 kann hierbei eine Abbildungs-Achse B zugeordnet werden, die somit das zweite Abbildungssystem 22 zur Erfassung der Objekte 20 auf oder vor der Außenseite 5b der Fahrzeugscheibe 5 beschreibt.

Wie teilweise dargestellt, können die zweite Eintrittsfläche 3c und die zweite Austrittsfläche 3d auch in in einer lateralen Richtung, z. B. senkrecht zur Zeichenebene - konturiert sein, oder andere optische Charakteristiken aufweisen, um somit ergänzend gewünschte optische Eigenschaften bzw. Abbildungseigenschaften in der lateralen Richtung zu erreichen. Hierdurch kann z. B. xxx So kann z. B. die zweite Eintrittsfläche 3c konvex gewölbt, z. B. um einen größeren Winkelbereich der von einem Objekt 20 ausgesandten Strahlung zu erfassen und abzubilden, und die zweite Austrittsfläche 3d z. B. abgeschrägt sein. Eine derartige Abschrägung bzw. laterale Strukturierung ist jedoch grundsätzlich nicht erforderlich.

Der gesamte optische Koppelkörper 3 weist somit den oberen flachen ersten Koppelkörper-Bereich 3-1 zur Ausbildung eines ersten Abbildungssystems 21 und den sich nach unten anschließenden zweiten Koppelkörper-Bereich 3-2 zur Ausbildung des zweiten Abbildungssystems 22 auf.

Gemäß der Darstellung der Fig. 1 bis 3 kann der gesamte optische Koppelkörper 3 homogen aus einem Material, z. B. mit einer optischen Dichte bzw. einem optischen Brechungsindex, der im Wesentlichen demjenigen der Fahrzeugscheibe 5 entspricht, oder auch etwas unterhalb desjenigen der Fahrzeugscheibe 5, d.h. zwischen Luft und der Fahrzeugscheibe 5 liegt, ausgebildet sein. Vorteilhafterweise weist der optische Koppelkörper 3 einen deutlich höheren Brechungsindex als Luft auf, sodass die aus den optischen Strahlengängen der Fig. 3 ersichtliche Brechung beim Übergang vom optischen Koppelkörper 3 zur Luft des Fahrzeug-Innenraums 15 auftritt.

Die Shore-Härte, d.h. der mechanische Widerstand, des Koppelkörpes 3 wird vorteilhafterweise so gewählt, dass sich die Anlagefläche 3a des Koppelkörpers 3 an die Innenseite 5a der Fahrzeugsscheibe 5, z.B. bei leicht gewölbter Fahrzeugscheibe 5, anpassen kann, so dass Lufteinschlüsse zwischen Koppelkörper 3 und Fahrzeugscheibe 5 vermieden werden können.

Der erste Koppelkörper-Bereich 3-1 dient insbesondere auch dazu, einen Abstand der Kameraoptik 11 zur Fahrzeugscheibe 5 optisch zu verringern; es zeigt sich hierbei, dass ein als L1 in Figur 3 eingezeichneter Durchtrittsbereich des ersten Erfassungsbereichs 17 gegenüber einer Ausbildung ohne den ersten Koppelkörper-Bereich 3-1 deutlich verringert wird.

Die Fahrzeugscheibe 5 kann mit einer Lichtblende ausgebildet sein, z. B. einem als solchen bekannten Schwarzdruck als lichtundurchlässige Schicht 30, insbesondere in einem oberen Bereich der Fahrzeugscheibe 5 nahe dem Dachhimmel. Somit ist in der lichtundurchlässigen Schicht 30 eine erste Ausnehmung 31 mit im Wesentlichen der Dimensionierung L1 (Durchtrittsbereich), und eine zweite Ausnehmung 32 für das zweite Abbildungssystem 22, d. h. zur Erfassung der Objekte 20 auf oder vor der Außenseite 5b der Fahrzeugscheibe 5 vorgesehen. Wie aus Fig. 3 ersichtlich, sind die Ausnehmungen 31 und 32 hierbei beabstandet. Die zweite Ausnehmung 32 kann somit insbesondere deutlich unterhalb der ersten Ausnehmung 31 vorgesehen sein. Hierbei kann ein Bereich der Fahrzeugscheibe 5 erreicht werden, der für optische Abbildung zur Erfassung des Fahrzeug-Umfeldes 14 nicht mehr relevant ist, z. B. vor der Motorhaube liegt, um hierbei die Regensensorikfunktion zu erreichen.

Alternativ zu der homogenen, einschichtigen Ausbildung des Koppelkörpers 3 kann gemäß Fig. 4 auch eine mehrschichtige Ausbildung vorgesehen sein, z. B. mit einer äußeren Schicht 34, insbesondere aus einem Material mit einer weicheren Shore Härte, entsprechend dem Material des Koppelkörpers 3 gemäß der Ausbildung der Fig. 1 bis 3, d. h. insbesondere einem Silikonmaterial, und einer sich nach innen - d. h. zum Fahrzeug-Innenraum 15 - anschließenden inneren Schicht 35, die insbesondere als feste Schicht, z. B. aus Mineralglas oder einem Acrylglas oder anderen Arten von transparenten Werkstoffen ausgebildet sein kann. Die innere Schicht 35 erhöht die Stabilität und dient zum gleichmäßigen Anpressen der äußeren Schicht 34 mit der an ihr ausgebildeten Anlagefläche 3a an die Innenseite 5a der Fahrzeugscheibe 5.

Die Schichten 34 und 35 können dabei vorteilhafterweise den gleichen Brechungsindex aufweisen; es sind jedoch auch Ausbildungen mit unterschiedlichem Brechungsindex möglich. Wie aus Fig. 4 ersichtlich, kann der zweite Koppelkörper-Bereich 3-2 einen weiteren auf der zweiten Schicht 35 aufgebrachten Bereich 36 aufweisen, so dass der zweite Koppelkörper-Bereich 3-2 somit dreischichtig aus den Schichten 34 und 35 sowie aus dem Bereich 36 besteht. Als Material für den Bereich 36 kann z.B. ein silikonhaltiges Medium gewählt werden, welches eine höhere Shore-Härte, d.h. mechanischen Widerstand, aufweist als die silikonhaltige Schicht 34.

Die Fig. 5 bis 7 zeigen eine weitere Ausführungsform, bei der lediglich beispielhaft ein optischer Koppelkörper 103 mit rein planarer bzw. biplanarer Ausbildung gezeigt ist, der somit im Wesentlichen dem ersten Koppelkörper-Bereich 3-1 der Ausführungsform der Fig. 1 bis 4 entspricht. In den Ausführungsformen der Fig. 5 bis 7 kann jedoch auch grundsätzlich ein optischer Koppelkörper 3 mit den Koppelkörper-Bereichen 3-1 und 3-2 gemäß der Fig. 1 bis 4 vorgesehen sein; die Ausführungsform der Fig. 5 bis 7 dienen insbesondere der Darstellung von Ausführungsformen unterschiedlicher Fixiereinrichtungen 104, 204, 304.

Hierbei können der optische Koppelkörper 103 insbesondere auch mehrschichtig, d. h. im Wesentlichen entsprechend Fig. 4 ausgebildet sein, d.h. nur mit den Schichten 34 und 35; grundsätzlich ist hier jedoch auch eine einschichtige Ausbildung möglich.

In Fig. 5 ist eine Fixiereinrichtung 104 aus z. B. Kunststoffmaterial vorgesehen, die an die Innenseite 5a der Fahrzeugscheibe 5 angebracht, z. B. geklebt wird. Hier dient die Fixiereinrichtung 104 auch als Kamerahalterung zur Aufnahme der gesamten Kamera 2. Die Fixiereinrichtung 104 kann dafür, wie gezeigt, das Kameragehäuse 8 an mehreren Stellen mechanisch aufnehmen, so dass die Kameraoptik 11 in eine Halterung 62 an der Fixiereinrichtung 104 eingesteckt ist. Insbesondere können Aufnahmen 42 und 44 vorgesehen sein, an denen untere und obere Enden des Kameragehäuses 8 aufgenommen sind.

Weiterhin dient die Fixiereinrichtung 104 auch zur Aufnahme des Koppelkörpers 103. Die Fixiereinrichtung 104 kann dafür insbesondere einen entsprechend dem optischen Koppelkörper 103 geformten Einsatz 40 aufweisen, in den der Koppelkörper 103 eingelegt wird, so dass beim Fixieren der Fixiereinrichtung 104 an der Innenseite 5a der Fahrzeugscheibe 5 auch der Koppelkörper 3 mit seiner Anlagefläche 3a an die Innenseite 5a der Fahrzeugscheibe 5 angepresst wird, vorzugsweise ohne dass dabei Lufteinschlüsse zwischen der Fahrzeugscheibe 5 und dem Koppelkörper 3 entstehen. Dazu kann der Einsatz 40 z.B. so ausgebildet sein, dass sich dieser zur Kameraoptik 11 hin, d. h. von der Fahrzeugscheibe 5 weg, verjüngt; dadurch wird beim Anpressen der Fixiereinrichtung 104 an die Fahrzeugscheibe 5 eine selbstzentrierende und sichernde Wirkung des Koppelkörpers 103 ermöglicht. Der Koppelkörper 103 ist dadurch insbesondere in der an der Fahrzeugscheibe 5 fixierten Fixiereinrichtung 104 "gefangen"; somit entsteht ein Formschluss zwischen Fixiereinrichtung 104 und Koppelkörper 103.

Zwischen der Fixiereinrichtung 104 und der Kameraoptik 11 (Objektiv) ist gemäß Fig. 5 in der Halterung 62 eine Dichtung 50 vorgesehen, z. B. eine RingDichtung. Grundsätzlich kann die Dichtung 50 auch z. B. an der Trägereinrichtung 10 anliegen; die gezeigte Anlage an der Kameraoptik 11 ist jedoch vorteilhaft. Durch die Dichtung 50 wird zwischen dem Koppelkörper 103, der Fixiereinrichtung 104 und der Kameraoptik 11 und vorteilhafterweise auch gegenüber dem Fahrzeug-Innenraum 15 ein abgedichteter Zwischenraum 52 gebildet; somit können keine relevanten Verschmutzungen oder z. B. Betauungen in diesem Zwischenraum 52 auftreten. Der Zwischenraum 52 kann mit dem Fahrzeuginnenraum 15 jedoch z. B. über eine durchlässige Membran zum Druckausgleich verbunden sein.

Die Fixiereinrichtung 104 dieser Ausführungsform dient somit zum einen der Aufnahme des optischen Koppelkörpers 103, weiterhin als Kamerahalterung zur Aufnahme der Kamera 2 und somit auch der gesamten Kameraanordnung 1 und zur Befestigung der Kameraanordnung 1 an der Fahrzeugscheibe 5, sowie zur Ausbildung des Zwischenraums 52 zum Schutz gegenüber Verschmutzungen.

Gemäß der Ausführungsform der Fig. 6 ist eine Fixiereinrichtung 204 vorgesehen, die im Wesentlichen die gleiche Ausbildung und Funktionalität wie die Fixiereinrichtung 104 der Fig. 5 aufweisen kann; ergänzend ist ein Trockenmittel 54 angebracht, um in den Zwischenraum 52 gelangende Feuchtigkeit aufnehmen zu können.

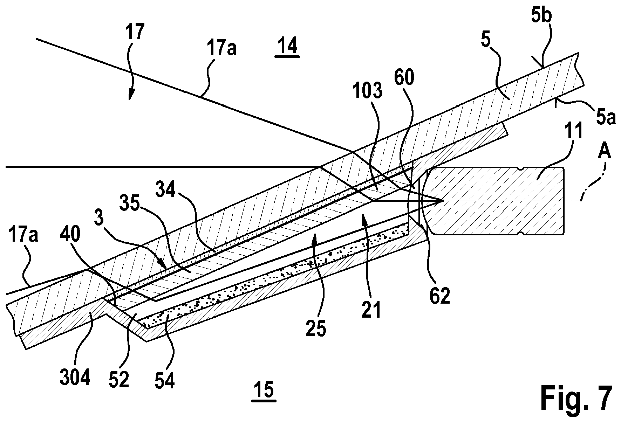

Fig. 7 zeigt eine weitere Ausführungsform, bei der eine Fixiereinrichtung 304 vorgesehen ist, mit der die Kameraoptik 11 durch Anpressen abgedichtet werden kann. Die Kameraoptik 11 kann dabei z. B. in Richtung ihrer optischen Achse A gegen ein weiches Koppelelement 60 gedrückt werden, das in der Halterung 62 der Fixiereinrichtung 304 aufgenommen ist. Das weiche Koppelelement 60 bzw. die Halterung 62 kann sich dabei z. B. von der Kameraoptik 11 weg, d. h. zur Fahrzeugscheibe 5 hin verjüngen; somit wird beim Anpressen der Kameraoptik 11 eine selbstzentrierende und sichernde Wirkung des Koppelelementes 60 in der Halterung 62 ermöglicht.

Somit wird hier eine abdichtende Anbindung der Kameraoptik 11 durch Anpressen erreicht. Auch in dieser Ausführungsform kann zusätzlich ein Trockenmittel 54 vorgesehen sein.

Bei den Ausführungsformen der Fig. 5 bis 7 kann zur Ausbildung der Kameraanordung 1 im Fahrzeug 6 somit zunächst der optische Koppelkörper 103 im Einsatz 40 der jeweiligen Fixiereinrichtung 104, 204, 304 aufgenommen werden, wobei bei dem gezeigten mehrschichtigen Aufbau die festere innere Schicht 35, z. B. Glas, eine hinreichende Stabilität gewährleistet. Anschließend wird die Fixiereinrichtung 104, 204, 304 mit dem optischen Koppelkörper 103 an der Innenseite 5a der Fahrzeugscheibe 5 befestigt, und dann die Kamera 2 gemäß Fig. 5 durch Einhängen in die Aufnahmen 42, 44, oder gemäß Fig. 7 durch Anpressen an das Koppelement 60, hieran befestigt.

## Patentansprüche

1. Kameraanordnung (1) für ein Fahrzeug (6), wobei die Kameraanordnung (1) mindestens aufweist:
eine Kamera (2) mit einer Kameraoptik (11) und einem Bildsensor (12), wobei der Bildsensor (12) und die Kameraoptik (11) eine optische Achse (A) der Kamera (2) festlegen,
einen optischen Koppelkörper (3, 103) mit einer Anlagefläche (3a) zur Anlage an einer Innenseite (5a) einer Fahrzeugscheibe (5), wobei der optische Koppelkörper (3, 103) aus einem optisch transparenten Material ausgebildet und in einem Erfassungsbereich (17, 18) der Kamera (2) angeordnet ist,
eine Fixiereinrichtung (4, 104, 204, 304) zwischen der Kamera (2) und dem optischen Koppelkörper (3, 103) vorgesehen ist zur relativen Positionierung des Koppelkörpers (3, 103) gegenüber der Kamera (2),
**dadurch gekennzeichnet, dass**
der optische Koppelkörper (3, 103) einen biplanaren Koppelkörper-Bereich (3-1) mit der Anlagefläche (3a) und einer im Wesentlichen parallel zu der Anlagefläche (3a) verlaufenden ersten Austrittsfläche (3b) aufweist, wobei die optische Achse (A) durch die als eine erste Eintrittsfläche für durch die Fahrzeugscheibe (5) eintretendes Licht (16a) ausbildende Anlagefläche (3a), den ersten Koppelkörper-Bereich (3-1) und die erste Austrittsfläche (3b) des optischen Koppelkörpers (3, 103) verläuft, und
der optische Koppelkörper (3) weiterhin einen zweiten Koppelkörper-Bereich (3-2) aufweist, der sich an den ersten Koppelkörper-Bereich (3-1) anschließt, wobei an dem zweiten Koppelkörper-Bereich (3-2) eine zweite Eintrittsfläche (3c) für durch die Fahrzeugscheibe (5) eintretendes Licht (16b) und eine zweite Austrittsfläche (3d) für aus dem zweiten Koppelkörper-Bereich (3-2) austretendes Licht (16b) zur Ausbildung eines zweiten Strahlengangs in die Kameraoptik (11) ausgebildet ist,
wobei die zweite Eintrittsfläche (3c) nicht-parallel zu der Anlagefläche (3a) und nicht-parallel zu der zweiten Austrittsfläche (3d) verläuft.

2. Kameraanordnung (1) nach Anspruch 1, **dadurch gekennzeichnet, dass** der zweite Koppelkörper-Bereich (3-2) prismatisch ausgebildet ist, wobei die zweite Eintrittsfläche (3c) und die zweite Austrittsfläche (3d) in einer von der Anlagefläche (3a) weg weisenden Richtung aufeinander zu verlaufen.

3. Kameraanordnung (1) nach Anspruch 1 oder 2, **dadurch gekennzeichnet, dass** ein aus der Kameraoptik (11) und dem zweiten Koppelkörper-Bereich (3-2) gebildetes zweites Abbildungssystem (22) eine kürzere Gegenstandsweite aufweist als eine durch die Kameraoptik (11) und den ersten Koppelkörper-Bereich (3-1) gebildetes erstes Abbildungssystem (21).

4. Kameraanordnung (1) nach Anspruch 3, **dadurch gekennzeichnet, dass** das zweite Abbildungssystem (22) zur Abbildung einer Außenseite (5b) der Fahrzeugscheibe (5) oder eines Objektes (20) auf der Außenseite (5b) der Fahrzeugscheibe (5) ausgebildet ist,
wobei ein Lichtpfad des zweiten Abbildungssystems (22) ausgelegt ist für einen Lichtdurchtritt durch die Fahrzeugscheibe (5), einen Strahlenpfad (24) zwischen der Fahrzeugscheibe (5) und dem Koppelkörper (3), der zweiten Eintrittsfläche (3c), der zweiten Austrittsfläche (3d) und der Kameraoptik (11) auf den Bildsensor (12).

5. Kameraanordnung (1) nach einem der Ansprüche 1 bis 4, **dadurch gekennzeichnet, dass** der optische Koppelkörper (3) mit dem ersten Koppelkörper-Bereich (3-1) und dem zweiten Koppelkörper-Bereich (3-2) einteilig aus einem homogenen Material, z. B. als Formteil, ausgebildet ist.

6. Kameraanordnung (1) nach einem der Ansprüche 1 bis 4, **dadurch gekennzeichnet, dass** der optische Koppelkörper (3, 103) mehrschichtig ausgebildet ist, mit einer die Anlagefläche (3a) aufweisenden äußeren Schicht (34) aus einem weicheren Material, und einer an die äußere Schicht (34) angrenzenden inneren Schicht (35) aus einem härteren Material, z. B. einer Glasplatte oder einem Acrylglas.

7. Kameraanordnung (1) nach einem der vorangehenden Ansprüche, **dadurch gekennzeichnet, dass** die Fixiereinrichtung (104, 204, 304) den optischen Koppelkörper (3) aufnimmt, vorzugsweise formschlüssig aufnimmt,
wobei die Anlagefläche (3a) zur klebstofffreien Anlage an der Innenseite (5a) der Fahrzeugscheibe (5) vorgesehen ist.

8. Kameraanordnung (1) nach einem der vorherigen Ansprüche, **dadurch gekennzeichnet, dass** die Fixiereinrichtung (104, 204, 304) als Kamerahalterung zur mechanischen Aufnahme der Kamera (2), z. B. eines Kameragehäuses (8) der Kamera (2), ausgebildet ist.

9. Kameraanordnung (1) nach einem der vorherigen Ansprüche, **dadurch gekennzeichnet, dass** in oder an der Fixiereinrichtung (204, 304) ein Trockenmittel (54) ausgebildet ist zur Trocknung eines Zwischenraums (52) zwischen der Fixiereinrichtung (204, 304) und dem Koppelkörper (103).

10. Kameraanordnung (1) nach einem der vorherigen Ansprüche, **dadurch gekennzeichnet, dass** die Fixiereinrichtung (104, 204, 304) eine Halterung (62) aufweist, in die die Kameraoptik (11) eingesetzt oder eingeschoben ist, wobei eine Dichtung (50) zur Abdichtung eines Zwischenraums (52) in der Fixiereinrichtung (104, 204, 304) vorgesehen ist.

11. Kameraanordnung (1) nach Anspruch 10, **dadurch gekennzeichnet, dass** als Dichtung (50) ein weiches Koppelelement (60) in der Halterung (62) der Fixiereinrichtung (304) aufgenommen ist,
wobei die Kameraoptik (11) entlang der optischen Achse (A) gegen das weiche Koppelelement (60) gedrückt oder angepresst ist.

12. Fahrzeug (6), das eine Fahrzeugscheibe (5), insbesondere Frontscheibe, zur Trennung eines Fahrzeug-Umfelds (14) gegenüber dem Fahrzeug-Innenraum (15) aufweist,
wobei eine Kameraanordnung (1) nach einem der vorherigen Ansprüche in dem Fahrzeug-Innenraum (15) vorgesehen ist, und
der optische Koppelkörper (3, 103) an einer Innenseite (5a) der Fahrzeugscheibe (5) anliegt oder angepresst ist,
wobei durch die Kameraoptik (11) und den optischen Koppelkörper (3, 103) das Fahrzeug-Umfeld (14) auf den Bildsensor (12) abbildbar ist, und
wobei der Koppelkörper (3) einen ersten Koppelkörper-Bereich (3-1) und einen sich an den ersten Koppelkörper-Bereich (3-1) anschließenden zweiten Koppelkörper-Bereich (3-2) aufweist,
wobei durch die Kameraoptik (11) und den ersten Koppelkörper-Bereich (3-1) ein erstes Abbildungssystem (21) zur Abbildung eines Fahrzeug-Umfeldes (14) mit einer ersten Gegenstandsweite auf den Bildsensor (12) ausgebildet ist, und wobei durch die Kameraoptik (11) und den zweiten Koppelkörper-Bereich (3-2) ein zweites Abbildungssystem (22) zur Abbildung eines Scheiben-Umfeldes (19) auf einer Außenseite (5b) der Fahrzeugscheibe (5) oder eines auf der Außenseite (5b) haftenden Objektes (20) auf den Bildsensor (12) ausgebildet ist, wobei das zweite Abbildungssystem (22) einen Strahlengang durch die Fahrzeugscheibe (5), zum Lichtaustritt aus der Innenseite (5a) der Fahrzeugscheibe (5), einen Lichtpfad (24) von der Fahrzeugscheibe (5) zu einer zweiten Eintrittsfläche (3c) des zweiten Koppelkörper-Bereichs (3-2), durch den zweiten Koppelkörper-Bereich (3-2) zu einer zweiten Austrittsfläche (3d) und zu der Kameraoptik (11) auf den Bildsensor (12) ausbildet.

13. Fahrzeug (6) nach Anspruch 12, **dadurch gekennzeichnet, dass** die Fixiereinrichtung (104, 204, 304) zur Befestigung an der Innenseite (5a) der Fahrzeugscheibe (5), z. B. mittels Klebung, vorgesehen ist, zum Anlegen oder Anpressen des optischen Koppelkörpers (3, 103) gegen die Innenseite (5a) der Fahrzeugscheibe (5).

## Claims

1. Camera arrangement (1) for a vehicle (6), wherein the camera arrangement (1) has at least:
a camera (2) having a camera optical unit (11) and an image sensor (12), wherein the image sensor (12) and the camera optical unit (11) define an optical axis (A) of the camera (2),
an optical coupling body (3, 103) having a resting surface (3a) for resting on an inner side (5a) of a vehicle pane (5), wherein the optical coupling body (3, 103) is made from an optically transparent material and is arranged within a capturing region (17, 18) of the camera (2),
a securing device (4, 104, 204, 304) between the camera (2) and the optical coupling body (3, 103), provided for a relative positioning of the coupling body (3, 103) with respect to the camera (2),
**characterized in that**
the optical coupling body (3, 103) has a biplanar coupling body region (3-1) with the resting surface (3a) and a first exit surface (3b) which extends substantially parallel with respect to the resting surface (3a), wherein the optical axis (A) extends through the resting surface (3a), which forms a first entry surface for light (16a) that enters through the vehicle pane (5), the first coupling body region (3-1) and the first exit surface (3b) of the optical coupling body (3, 103), and
the optical coupling body (3) furthermore has a second coupling body region (3-2), which adjoins the first coupling body region (3-1), wherein a second entry surface (3c) for light (16b)entering through the vehicle pane (5) and a second exit surface (3d) for light (16b) exiting the second coupling body region (3-2) are formed at the second coupling body region (3-2) for forming a second beam path into the camera optical unit (11),
wherein the second entry surface (3c) extends non-parallel with respect to the resting surface (3a) and non-parallel with respect to the second exit surface (3d) .

2. Camera arrangement (1) according to Claim 1, **characterized in that** the second coupling body region (3-2) is of prismatic configuration, wherein the second entry surface (3c) and the second exit surface (3d) extend toward one another in a direction which is oriented away from the resting surface (3a).

3. Camera arrangement (1) according to Claim 1 or 2, **characterized in that** a second imaging system (22), formed from the camera optical unit (11) and the second coupling body region (3-2), has a shorter object distance than a first imaging system (21), formed by the camera optical unit (11) and the first coupling body region (3-1).

4. Camera arrangement (1) according to Claim 3, **characterized in that** the second imaging system (22) is configured for imaging an outer side (5b) of the vehicle pane (5) or an object (20) on the outer side (5b) of the vehicle pane (5),
wherein a light path of the second imaging system (22) is designed for a light passage through the vehicle pane (5), a beam path (24) between the vehicle pane (5) and the coupling body (3), the second entry surface (3c), the second exit surface (3d) and the camera optical unit (11) onto the image sensor (12).

5. Camera arrangement (1) according to one of Claims 1 to 4, **characterized in that** the optical coupling body (3) is formed in one piece from a homogeneous material, e.g. as a moulded part, with the first coupling body region (3-1) and the second coupling body region (3-2).

6. Camera arrangement (1) according to one of Claims 1 to 4, **characterized in that** the optical coupling body (3, 103) has a multilayered configuration, with an outer layer (34), having the resting surface (3a), made from a softer material and an inner layer (35), adjoining the outer layer (34), made from a harder material, e.g. a glass plate or an acrylic glass.

7. Camera arrangement (1) according to one of the preceding claims, **characterized in that** the securing device (104, 204, 304) receives the optical coupling body (3), preferably receives it in a form-fitting manner, wherein the resting surface (3a) is provided for adhesive-free resting on the inner side (5a) of the vehicle pane (5).

8. Camera arrangement (1) according to one of the preceding claims, **characterized in that** the securing device (104, 204, 304) is formed as a camera holder for mechanically receiving the camera (2), e.g. a camera housing (8) of the camera (2).

9. Camera arrangement (1) according to one of the preceding claims, **characterized in that** formed in or on the securing device (204, 304) is a desiccant (54) for drying an intermediate space (52) between the securing device (204, 304) and the coupling body (103).

10. Camera arrangement (1) according to one of the preceding claims, **characterized in that** the securing device (104, 204, 304) has a holder (62), into which the camera optical unit (11) is inserted or pushed, wherein a seal (50) for sealing an intermediate space (52) is provided in the securing device (104, 204, 304) .

11. Camera arrangement (1) according to Claim 10, **characterized in that** a soft coupling element (60) is received in the holder (62) of the securing device (304) as a seal,
wherein the camera optical unit (11) is pushed or pressed against the soft coupling element (60) along the optical axis (A).

12. Vehicle (6), having a vehicle pane (5), in particular a windscreen, for separating a vehicle environment (14) with respect to the vehicle interior (15),
wherein a camera arrangement (1) according to one of the preceding claims is provided in the vehicle interior (15), and
the optical coupling body (3, 103) rests or is pressed against an inner side (5a) of the vehicle pane (5), wherein the vehicle environment (14) is able to be imaged onto the image sensor (12) by way of the camera optical unit (11) and the optical coupling body (3, 103), and
wherein the coupling body (3) has a first coupling body region (3-1) and a second coupling body region (3-2) adjoining the first coupling body region (3-1),
wherein a first imaging system (21) for imaging a vehicle environment (14) with a first object distance onto the image sensor (12) is formed by the camera optical unit (11) and the first coupling body region (3-1), and
wherein a second imaging system (22) for imaging a pane environment (19) on an outer side (5b) of the vehicle pane (5) or an object (20) adhering to the outer side (5b) onto the image sensor (12) is formed by the camera optical unit (11) and the second coupling body region (3-2),
wherein the second imaging system (22) forms a beam path through the vehicle pane (5) for the light exit from the inner side (5a) of the vehicle pane (5), a light path (24) from the vehicle pane (5) to a second entry surface (3c) of the second coupling body region (3-2), through the second coupling body region (3-2), to a second exit surface (3d) and to the camera optical unit (11) onto the image sensor (12).

13. Vehicle (6) according to Claim 12, **characterized in that** the securing device (104, 204, 304) for attaching to the inner side (5a) of the vehicle pane (5), e.g. using adhesive bonding, is provided for resting or pressing the optical coupling body (3, 103) against the inner side (5a) of the vehicle pane (5).

## Revendications

1. Système de caméra (1) destiné à un véhicule (6), dans lequel le système de caméra (1) comprend au moins :
une caméra (2) dotée d'un objectif de caméra (11) et d'un capteur d'image (12), dans lequel le capteur d'image (12) et l'objectif de caméra (11) définissent un axe optique (A) de la caméra (2),
un corps de couplage optique (3, 103) possédant une surface de montage (3a) permettant un montage sur une face intérieure (5a) d'une vitre de véhicule (5), dans lequel le corps de couplage optique (3, 103) est constitué d'un matériau optiquement transparent et est disposé dans une zone de détection (17, 18) de la caméra (2),
un dispositif de fixation (4, 104, 204, 304) qui est prévu entre la caméra (2) et le corps de couplage optique (3, 103) afin de permettre un positionnement relatif du corps de couplage (3, 103) par rapport à la caméra (2),
**caractérisé en ce que** le corps de couplage optique (3, 103) présente une région de corps de couplage à deux plans (3-1) avec la surface de montage (3a) et une première surface de sortie (3b) s'étendant sensiblement parallèlement à la surface de montage (3a), dans lequel l'axe optique (A) passe à travers la surface de montage (3a) formant une première surface d'entrée pour la lumière (16a) pénétrant à travers la vitre de véhicule (5), la première région de corps de couplage (3-1) et la première surface de sortie (3b) du corps de couplage optique (3, 103), et
le corps de couplage optique (3) comprend en outre une seconde région de corps de couplage (3-2) qui est adjacente à la première région de corps de couplage (3-1), dans lequel une seconde surface d'entrée (3c) pour la lumière (16b) pénétrant à travers la vitre de véhicule (5) et une seconde surface de sortie (3d) pour la lumière (16b) sortant de la seconde région de corps de couplage (3-2) sont formées au niveau de la seconde région de corps de couplage (3-2) pour former un second chemin de faisceau dans l'optique de caméra (11),
dans lequel la seconde surface d'entrée (3c) est non parallèle à la surface de montage (3a) et non parallèle à la seconde surface de sortie (3d).

2. Système de caméra (1) selon la revendication 1, **caractérisé en ce que** la seconde zone de corps de couplage (3-2) est réalisée sous forme prismatique, dans lequel la seconde surface d'entrée (3c) et la seconde surface de sortie (3d) s'étendent dans une direction opposée à la surface de montage (3a).

3. Système de caméra (1) selon la revendication 1 ou 2, **caractérisé en ce qu'**un second système de formation d'image (22) constitué par l'optique de caméra (11) et la seconde région de corps de couplage (3-2) présente une distance objet inférieure à celle d'un premier système de formation d'image (21) constitué par l'optique de caméra (11) et la première région de corps de couplage (3-1).

4. Système de caméra (1) selon la revendication 3, **caractérisé en ce que** le second système de formation d'image (22) est réalisé de manière à former l'image d'une face extérieure (5b) de la vitre de véhicule (5) ou d'un objet (20) sur la face extérieure (5b) de la vitre de véhicule (5),
dans lequel un chemin optique du second système de formation d'image (22) est apte à faire passer la lumière à travers la vitre de véhicule (5), un chemin de faisceau (24) entre la vitre de véhicule (5) et le corps de couplage (3), la seconde surface d'entrée (3c), la seconde surface de sortie (3d) et l'optique de caméra (11) pour atteindre le capteur d'image (12).

5. Système de caméra (1) selon l'une des revendications 1 à 4, **caractérisé en ce que** le corps de couplage optique (3) est formé d'une seule pièce avec la première région de corps de couplage (3-1) et la seconde région de corps de couplage (3-2) à partir d'un matériau homogène, par exemple en tant que pièce moulée.

6. Système de caméra (1) selon l'une des revendications 1 à 4, **caractérisé en ce que** le corps de couplage optique (3, 103) est réalisé sous forme multicouche, avec une couche extérieure (34) présentant la surface de montage (3a) et constituée d'un matériau plus souple, et une couche intérieure (35) constituée d'un matériau plus dur, par exemple une lame de verre ou un verre acrylique, adjacente à la couche extérieure (34) .

7. Système de caméra (1) selon l'une des revendications précédentes, **caractérisé en ce que** le dispositif de fixation (104, 204, 304) reçoit le corps de couplage optique (3), de préférence par complémentarité de forme, dans lequel la surface de montage (3a) est prévue pour un montage sans adhésif sur la face intérieure (5a) de la vitre de véhicule (5).

8. Système de caméra (1) selon l'une des revendications précédentes, **caractérisé en ce que** le dispositif de fixation (104, 204, 304) est réalisé sous la forme d'un support de caméra destiné à recevoir mécaniquement la caméra (2), par exemple un boîtier de caméra (8) de la caméra (2).

9. Système de caméra (1) selon l'une des revendications précédentes, **caractérisé en ce qu'**un agent de séchage (54) est formé dans ou sur le dispositif de fixation (204, 304) pour sécher un espace intermédiaire (52) entre le dispositif de fixation (204, 304) et le corps de couplage (103).

10. Système de caméra (1) selon l'une des revendications précédentes, **caractérisé en ce que** le dispositif de fixation (104, 204, 304) comporte un support (62) dans lequel l'optique de caméra (11) est insérée ou enfoncée, dans lequel un joint d'étanchéité (50) est prévu pour étanchéifier un espace intermédiaire (52) dans le dispositif de fixation (104, 204, 304).

11. Système de caméra (1) selon la revendication 10, **caractérisé en ce qu'**un élément de couplage souple (60) est reçu en tant que joint d'étanchéité (50) dans le support (62) du dispositif de fixation (304),
dans lequel l'optique de caméra (11) est comprimée ou pressée contre l'élément de couplage souple (60) le long de l'axe optique (A).

12. Véhicule (6) comportant une vitre de véhicule (5), en particulier un pare-brise, pour séparer un environnement de véhicule (14) de l'intérieur du véhicule (15),
dans lequel il est prévu un système de caméra (1) selon l'une des revendications précédentes dans l'espace intérieur (15) du véhicule, et
le corps de couplage optique (3, 103) est monté ou pressé sur une face intérieure (5a) de la vitre de véhicule (5), dans lequel l'image de l'environnement (14) du véhicule peut être formée sur le capteur d'image (12) par l'intermédiaire de l'optique de caméra (11) et du corps de couplage optique (3, 103), et
dans lequel le corps de couplage (3) présente une première région de corps de couplage (3-1) et une seconde région de corps de couplage (3-2) adjacente à la première région de corps de couplage (3-1),
dans lequel un premier système de formation d'image (21) est constitué par l'optique de caméra (11) et la première région de corps de couplage (3-1) pour former sur le capteur d'image (12) une image d'un environnement (14) du véhicule avec une première distance objet, et
dans lequel un second système de formation d'image (22) est formé par l'optique de caméra (11) et la seconde région de corps de couplage (3-2) pour former sur le capteur d'image (12) une image d'un environnement de vitre (19) sur une face extérieure (5b) de la vitre de véhicule (5) ou d'un objet (20) adhérant à la face extérieure (5b),
dans lequel le second système de formation d'image (22) forme un chemin de faisceau à travers la vitre de véhicule (5), pour une sortie de lumière depuis la face intérieure (5a) de la vitre de véhicule (5), un chemin optique (24) depuis la vitre de véhicule (5) vers une seconde surface d'entrée (3c) de la seconde région de corps de couplage (3-2), à travers la seconde région de corps de couplage (3-2) vers une seconde surface de sortie (3d) et vers l'optique de caméra (11) pour atteindre le capteur d'image (12).

13. Véhicule (6) selon la revendication 12, **caractérisé en ce que** le dispositif de fixation (104, 204, 304) est prévu pour la fixation sur la face intérieure (5a) de la vitre de véhicule (5), par exemple par collage, pour monter ou presser le corps de couplage optique (3, 103) contre la face intérieure (5a) de la vitre de véhicule (5).
